(19) Europäisches Patentamt
European Patent Office
Office européen des brevets

(11) **EP 4 195 873 A1**

(12) **EUROPEAN PATENT APPLICATION**

(43) Date of publication:
**14.06.2023 Bulletin 2023/24**

(21) Application number: **22211938.0**

(22) Date of filing: **07.12.2022**

(51) International Patent Classification (IPC):
**H05B 1/02** *(2006.01)* **A47K 13/30** *(2006.01)*

(52) Cooperative Patent Classification (CPC):
**H05B 1/0252; A47K 13/305; G05D 23/1902**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 CN 202111486676**
**01.12.2022 US 202218073152**

(71) Applicant: **Shanghai Kohler Electronics, Ltd.**
**Shanghai 200444 (CN)**

(72) Inventor: **WANG, Yingfeng**
**200444 Shanghai (CN)**

(74) Representative: **Barker Brettell LLP**
**100 Hagley Road**
**Edgbaston**
**Birmingham B16 8QQ (GB)**

(54) **HEATING SEAT RING VOLTAGE SELF-ADAPTION METHOD, ELECTRONIC DEVICE, AND STORAGE MEDIUM**

(57) A heating seat ring voltage self-adaption method includes: determining a voltage acting on a seat ring heater of a heating seat ring; determining a heating power coefficient based on the voltage; and performing a heating control on the seat ring heater by using the heating power coefficient. An electronic device includes a seat ring heater and a processor communicably coupled to the seat ring heater. The processor configured to: determine a voltage acting on the seat ring heater; determine a heating power coefficient based on the voltage; and perform a heating control on the seat ring heater by using the heating power coefficient. A non-transitory storage medium configured to store computer instructions executed by the processor.

S101 — Determine an actual voltage acting on a seat ring heater.

S102 — Determine a heating power coefficient based on the actual voltage.

S103 — Perform a heating control on the seat ring heater by using the heating power coefficient.

**FIG. 1**

EP 4 195 873 A1

**Description**

**CROSS REFERENCE TO RELATED APPLICATION**

This application claims the benefit of priority to Chinese Patent Application No. 202111486676.2 filed in the Chinese Intellectual Property Office on December 7, 2021, and US Patent Application No. 18/073,152 filed in the US Patent & Trademark Office on December 1, 2022, which are hereby incorporated by reference in their entirety.

**FIELD**

The present disclosure relates to the technical field of toilets, in particular to a toilet cover plate and a toilet. The present disclosure relates to the technical field relevant to sanitary equipment, and particularly to a heating seat ring voltage self-adaption method, an electronic device and a storage medium.

**BACKGROUND**

Smart toilets are sold all over the world, and there are various voltages (such as: 100V, 110V, 120V, 220V and 240V) all over the world. Therefore, seat ring heaters with corresponding voltages are designed for countries with different voltages in the prior art, such as 220V/40W in China, 120V/40W in the United States, and 100V/40W in Japan. Different models of seat heaters need to be designed for different countries.
Since heaters with different voltages and the same heating power are developed for countries with different voltages, the same heating control method is used. Meanwhile, a smart toilet in the prior art lacks a rapid heating function.

**SUMMARY**

In view of the above technical problem, it is necessary to provide a heating seat ring voltage self-adaption method, an electronic device and a storage medium, aiming to address the technical problem that the heaters with different voltages and the same heating power are used in countries with different voltage standards resulting in more types of materials.
The present disclosure provides a heating seat ring voltage self-adaption method, which comprises: determining an actual voltage acting on a seat ring heater; determining a heating power coefficient corresponding to the actual voltage based on the actual voltage; and performing a heating control on the seat ring heater with the heating power coefficient.
Further, the determining the actual voltage acting on the seat ring heater specifically comprises: acquiring a measurement duty ratio used for measuring the actual voltage; performing a measurement heating with the measurement duty ratio; stopping the measurement heating after performing the measurement heating for a preset measurement time and calculating a difference between a temperature when the measurement heating is stopped and a temperature before the measurement heating is performed as a temperature elevated value; acquiring a current ambient temperature; and determining the corresponding actual voltage according to or based on the temperature elevated value and the current ambient temperature.
Further, the acquiring the measurement duty ratio used for measuring the actual voltage specifically comprises: in response to a seat ring heating request, determining a target temperature of the seat ring heating request as a target ring temperature of a heating seat ring; acquiring a current temperature of the heating seat ring as an initial ring temperature; and determining the measurement duty ratio used for measuring the actual voltage according to or based on a difference between the target ring temperature and the initial ring temperature.
Further, the determining the corresponding actual voltage according to the temperature elevated value and the current ambient temperature specifically comprises: determining the corresponding actual voltage according to or based on the measurement duty ratio used, the temperature elevated value, and the current ambient temperature.
Further, the determining the heating power coefficient corresponding to the actual voltage based on the actual voltage specifically comprises: calculating that a heating power coefficient $k = $ (a reference voltage)$^2$ / (the actual voltage)$^2$, according to the actual voltage and a preset reference voltage.
Further, the performing the heating control on the seat ring heater with the heating power coefficient specifically comprises: performing the heating control on the heating seat ring by using a proportion integral differential heating control method, wherein a proportional coefficient in the proportion integral differential control method is the heating power coefficient.
Further, the performing the heating control on the seat ring heater with the heating power coefficient specifically comprises: when a difference between a target ring temperature and a current temperature of a heating seat ring is greater than a preset temperature difference threshold, performing the heating control with a preset full power coefficient; or when the difference between the target ring temperature and the current temperature of the heating seat ring is less than or equal to the preset temperature difference threshold, performing the heating control on the seat ring heater with the heating power coefficient. The full power coefficient is greater than or equal to the heating power coefficient.

Further, the performing the heating control on the seat ring heater with the heating power coefficient specifically comprises: when the difference between the target ring temperature and the current temperature of the heating seat ring is less than or equal to the preset temperature difference threshold, calculating a number of heating waveforms to be output in a unit time as a number of reference waveforms when the heating control is performed on the heating seat ring under the actual voltage; calculating a number of actual waveforms by multiplying the number of reference waveforms by the heating power coefficient; and controlling to output heating waveforms of the number of actual waveforms in each unit time.

The present disclosure provides an electronic device, which comprises: at least one processor; and a memory communicatively connected to the at least one processor.

The memory stores an instruction executable by the at least one processor, and the instruction is executed by the at least one processor, so that the at least one processor is capable of executing the heating seat ring voltage self-adaption method above.

The present disclosure provides a storage medium, wherein the storage medium stores computer instructions which, when executed by a computer, are used to execute all steps of the heating seat ring voltage self-adaption method above.

According to the present disclosure, the heating control is adaptively adjusted based on the heating power coefficient to adapt to different actual voltages, so that the types of materials may be reduced. Meanwhile, a heating time can be shortened through rapid heating, the comfort can be improved, and the energy consumption can be reduced.

## BRIEF DESCRIPTION OF THE FIGURES

FIG. 1 is a workflow chart of a heating seat ring voltage self-adaption method of the present disclosure;

FIG. 2 is a workflow chart of a heating seat ring voltage self-adaption method according to an example of the present disclosure;

FIG. 3 is a workflow chart of a method for measuring an actual voltage according to an example of the present disclosure;

FIG. 4 is a schematic diagram of heating waveforms under different duty ratios; and

FIG. 5 is a schematic structural diagram showing a hardware of an electronic device of the present disclosure.

## DETAILED DESCRIPTION

The specific embodiments of the present disclosure are further described with reference to the accompanying drawings hereinafter. The same parts are denoted by the same reference numerals. It should be noted that the terms "front", "back", "left", "right", "up" and "down" used in the following description refer to the directions in the drawings, and the terms "inner" and "outer" refer to the directions towards or far away from geometric centers of specific parts respectively.

The methods according to Embodiment 1, Embodiment 2, and Embodiment 3 may be performed by a controller of a seat ring heater of a smart toilet. The controller in the present disclosure can be implemented by any appliances or by any software or applications run by the appliances. The controller may include a processor 501 as described below. Optionally, the controller 110 may include an input device and/or a sensing circuit in communication with any of the sensors. The sensing circuit receives sensor measurements from as described above.

### Embodiment 1

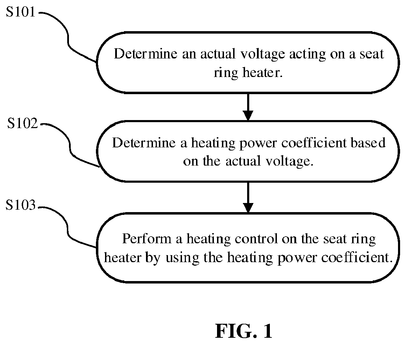

FIG. 1 shows a workflow chart of a heating seat ring voltage self-adaption method of the present disclosure. The method comprises the following steps.

In step S101, the controller of the seat ring heater may determine an actual voltage acting on a seat ring heater.

In step S102, the controller of the seat ring heater may, based on the actual voltage, determine a heating power coefficient that corresponding to the actual voltage.

In step S103, the controller of the seat ring heater may perform a heating control on the seat ring heater by using the heating power coefficient.

Specifically, the method of the present disclosure may be applied to or performed by the controller of the seat ring heater of the smart toilet. According to the present disclosure, the same seat ring heater can be used in the countries with different voltage standards. In an embodiment, the seat ring heater may be a resistance heater. The current seat ring heaters in the market are designed with the same power for different voltages. However, the seat ring heater of the present disclosure uses only one type of seat ring heater, and thus the powers of the seat ring heater are different for different voltages. For example, one type of the seat ring heater may be 100V/40W. When the voltage is 220V, the power of the seat ring heater is 193.6W. An available voltage range is between 100V and 240V.

Therefore, in the step S101 of the present disclosure, the actual voltage on the seat ring heater is first determined, and the actual voltage may be determined by detection or read from a memory of a device.

In one embodiment, the voltage applicable to the country to which the seat ring heater will be sold is written into a non-volatile or non-transitory memory of the controller before the seat ring heater leaves the factory. The voltage may be read from the non-volatile memory when the step S101 is executed.

Then, in the step S102, the controller of the seat ring heater may the heating power coefficient. Different powers will be output due to different voltages. Therefore, output power is adjusted through the heating power coefficient, so that the output power can be adjusted adaptively under different actual voltages to reach an output power needed by a designed specification. For example, the specification of the seat ring heater is set to be 100V/40W. When the actual voltage is 220V, the output power will also be adjusted to be consistent with 40W through the heating power coefficient. Finally, in the step S103, the controller of the seat ring heater may perform the heating control on the seat ring heater with the heating power coefficient to adjust the output power.

According to the present disclosure, the heating control is adaptively adjusted based on the heating power coefficient to adapt to different actual voltages, so that the types of materials are reduced.

**Embodiment 2**

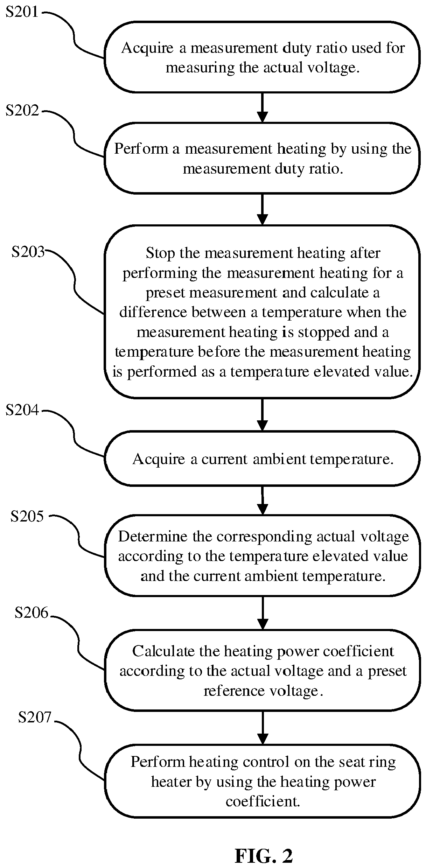

FIG. 2 shows a workflow chart of a heating seat ring voltage self-adaption method according to an example of the present disclosure. The method comprises the following steps.

In step S201, the controller of the seat ring heater may acquire a measurement duty ratio (or duty cycle) used for measuring the actual voltage. The measurement duty ratio is defined by a ratio between a pulse duration (or pulse width) and a period of a digital signal (waveform). The duty measurement ratio may be expressed by the following equation:

$$D = \frac{PW}{T} \times 100\%.$$

Here, $D$ is the measurement duty ratio, $PW$ is the pulse duration, which is a pulse active time, and $T$ is the period of the signal. In an embodiment, the pulse active time may be an on-signal output to a load. Thus, for example, a 60% measurement duty ratio means the signal is on 60% of the time but off 40% of the time. A variation of the measurement duty ratio may result in a variation of the average value of the waveform.

By varying the measurement duty ratio, an amount of the power (voltage or current) output to a load may be varied and thus the load may be controlled. Specifically, the amount of the power fed to the load is controlled by turning a switch, between a power supply and the load, on and off at a fast rate. The longer the switch is on compared to the off periods, the higher the total power supplied to the load. This method is called "pulse width modulation" (PWM). In this embodiment, the load may be the seat ring heater.

According to the present disclosure, a temperature difference ΔT may be obtained to determine a measurement duty ratio. By using the measurement duty ratio to obtain a temperature elevated value, an amount of an actual voltage output to the load may be determined. Then, a heating power coefficient may be determined based on the actual voltage so as to perform a heating control on the seat ring heater. The specific procedures to obtain, the measurement duty ratio, the actual voltage output, and the heating power coefficient are described below.

In one embodiment, the step of acquiring the measurement duty ratio used for measuring the actual voltage specifically comprises: in response to a seat ring heating request, determine a target temperature of the seat ring heating request as a target ring temperature of a heating seat ring; acquire a current temperature of the heating seat ring as an initial ring temperature; and determine the measurement duty ratio used for measuring the actual voltage according to a difference between the target ring temperature and the initial ring temperature.

In step S202, the controller of the seat ring heater may perform a measurement heating with the measurement duty ratio.

In step S203, the controller of the seat ring heater may the measurement heating after performing the measurement heating for a preset measurement time. The controller of the seat ring heater may calculate, as a temperature elevated value, a difference between the temperature when the measurement heating is stopped and the temperature before the measurement heating is carried out.

In step S204, the controller of the seat ring heater may acquire a current ambient temperature.

In step S205, the controller of the seat ring heater may determine the corresponding actual voltage according to the temperature elevated value and the current ambient temperature.

In one embodiment, the step of determining the corresponding actual voltage according to the temperature elevated value and the current ambient temperature specifically comprises determining the corresponding actual voltage according to the measurement duty ratio, the temperature elevated value, and the current ambient temperature.

In step S206, the controller of the seat ring heater may calculate a heating power coefficient k = (a reference voltage)$^2$ / (the actual voltage)$^2$, according to the actual voltage and a preset reference voltage.

In step S207, the controller of the seat ring heater may perform a heating control on the seat ring heater with the heating power coefficient.

In one embodiment, the step of performing the heating control on the seat ring heater with the heating power coefficient specifically comprises performing the heating control on the heating seat ring by using a proportion-integral-differential heating control method. A proportional coefficient in the proportion-integral-differential control method is the heating power coefficient.

In one embodiment, the step of performing the heating control on the seat ring heater with the heating power coefficient specifically comprises: when a difference between a target ring temperature and a current temperature of a heating seat ring is greater than a preset temperature difference threshold, performing the heating control with a preset full power coefficient; and/or when the difference between the target ring temperature and the current temperature of the heating seat ring is less than or equal to the preset temperature difference threshold, performing the heating control on the seat ring heater with the heating power coefficient. The full power coefficient is greater than or equal to the heating power coefficient.

In one embodiment, when the difference between the target ring temperature and the current temperature of the heating seat ring is less than or equal to the preset temperature difference threshold, the step of performing the heating control on the seat ring heater with the heating power coefficient specifically comprises the following steps.

When the difference between the target ring temperature and the current temperature of the heating seat ring is less than or equal to the preset temperature difference threshold, the controller of the seat ring heater may calculate a number of heating waveforms to be output in a unit time as a number of reference waveforms when the heating control is carried out on the heating seat ring under the actual voltage.

The controller of the seat ring heater may calculate a number of actual waveforms which is the number of reference waveforms multiplied by the heating power coefficient.

The controller of the seat ring heater may control the output of the number of actual waveforms of heating waveforms in each unit time.

Specifically, the actual voltage is detected through the step S201 to the step S205. In order to prevent the actual voltage from being too high, resulting in too fast temperature increase, the measurement duty ratio is determined through the step S201. The measurement duty ratio may be preset. For example, the measurement duty ratio is set to be 50%. In one embodiment, the measurement duty ratio is determined through the temperature difference. The controller of the seat ring heater may detect a temperature of the seat ring at the beginning of powering on, select the measurement duty ratio according to a temperature difference ΔT = the target ring temperature - the initial ring temperature, and start heating. For example, when ΔT > 15 K (Kelvin), PWM value = 75%, which may mean a 75% measurement duty ratio. When ΔT = 10 K (Kelvin), PWM value = 60%, which may mean a 60% measurement duty ratio. As for a specific relationship between the temperature difference and the measurement duty ratio, a relationship table of the temperature difference and the measurement duty ratio may be calibrated and made in advance. Then, the measurement duty ratio corresponding to the temperature difference is determined by querying the relationship table of the temperature difference and the measurement duty ratio after determining the temperature difference.

Then, the measurement heating is carried out by using the measurement duty ratio in the step S202. When the heating is carried out for the preset measurement time, the measurement heating is stopped. For example, a measurement heater is stopped after heating for 30 seconds. At the moment, the temperature elevated value and the ambient temperature value of the seat ring are collected, and the voltage acting on the heater is obtained by querying the table. The temperature elevated value of the seat ring is a temperature when the measurement heating is stopped minus a temperature before the measurement heating is carried out. For example, when the temperature elevated value = 5 K (Kelvin) and the ambient temperature value = 25°C, the actual voltage = 220 V is obtained, which is stored in a non-volatile memory. This means that the actual voltage only needs to be calculated every time the seat ring heater is powered on. When the measurement duty ratio is fixed, a relationship table of the temperature elevated value, the current ambient temperature, and the actual voltage is determined by calibration. When the temperature elevated value and the current ambient temperature value are acquired, the corresponding actual voltage is determined by querying the relationship table of the temperature elevated value, the current ambient temperature, and the actual voltage. When the measurement duty ratio is acquired by measurement, a relationship table of the measurement duty ratio, the temperature elevated value, the current ambient temperature, and the actual voltage is determined through calibration, and when the measurement duty ratio, the temperature elevated value and the current ambient temperature value are acquired, the corresponding actual voltage is determined by querying the relationship table of the measurement duty ratio, the temperature elevated value, the current ambient temperature, and the actual voltage.

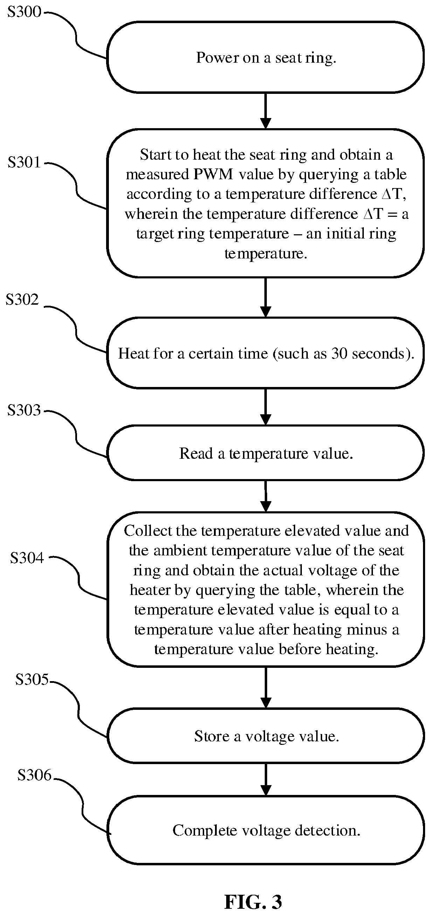

FIG. 3 is a workflow chart of a method for measuring an actual voltage according to an example of the present disclosure. The method comprises the following steps.

In step S300, the controller of the seat ring heater may power on a whole machine (e.g., the seat ring),

In step S301, the controller of the seat ring heater may obtain a measured PWM value (measurement duty ratio) by querying the table according to the temperature difference $\Delta T$. The temperature difference $\Delta T$ = the target ring temperature - the initial ring temperature.

In step S302, the controller of the seat ring heater may perform the heating for a certain time (e.g., 30 seconds).

In step S303, the controller of the seat ring heater may read a temperature value.

In step S304, the controller of the seat ring heater may collect the temperature elevated value of the seat ring and the ambient temperature value, and the actual voltage of the heater is obtained by querying the table, wherein the temperature elevated value = a temperature value after heating - a temperature value before heating.

In step S305, the controller of the seat ring heater may store a voltage value and complete the voltage detection.

In step S306, the controller of the seat ring heater completes the voltage detection.

In this embodiment, different PWM values (measurement duty ratios) are used for outputting different heating powers according to different voltages during heat preservation, so as to achieve the same effect as the seat heater, which determines the power according to the voltage. The heating power coefficient k is calculated in the step S206, and the heating control is carried out on the seat ring heater by using the heating power coefficient in the step S207. Specifically, the heating power coefficient is a ratio of heating output. When the heating coefficient is higher, the output power is greater, and for an alternating current (AC) heating by using a sinusoid, a number of output half-sinusoids is larger. A calculation method of the heating power coefficient is that:

$k$ = (reference voltage)$^2$ / (detected actual voltage)$^2$. The reference voltage is selected in advance (e.g., a preset reference voltage). The reference voltage may be selected as a minimum allowable voltage of the seat ring heater and may also be selected as a voltage used to enable the seat ring heater to reach the designed power. For example, for a seat ring heater with a specification of 100V/40W, a reference voltage of 100V may be selected, and then it is calculated that:

in the case of 100V, the heating power coefficient is that $k = 1$, and
in the case of 220V, the heating power coefficient is that $k = 0.21$.

A heating algorithm may be a proportion integral differential (PID) control algorithm. The heating power coefficient $k$ may be used as a proportion coefficient P of PID heating control.

When the difference between the current temperature and the target temperature of the seat ring is small (for example, when the target temperature - the current temperature $\leq$ 6°C), for example, in a heat preservation stage, or when the heating is carried out to approach the target temperature, the heating control is performed to prevented the temperature from overshooting.

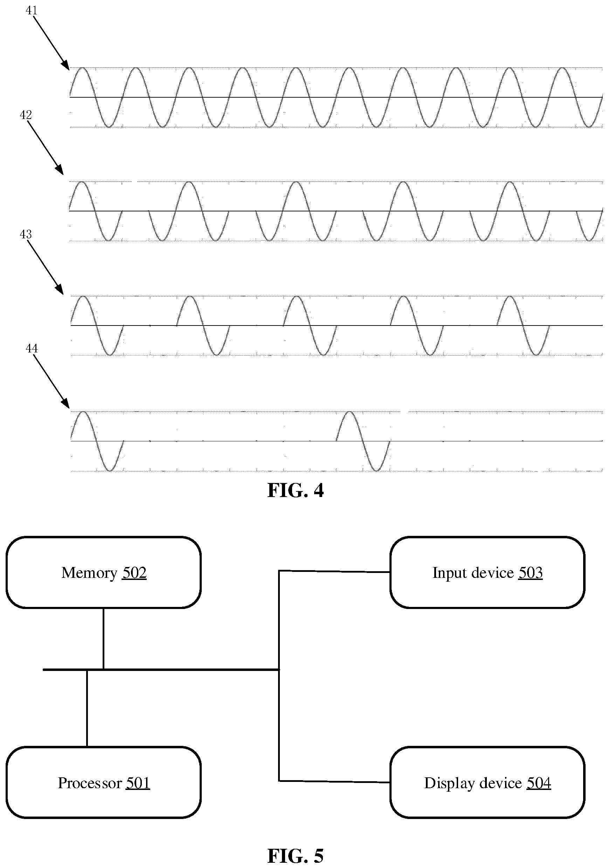

Specifically, in the heating algorithm, in a unit time, e.g., 1 second, the power output of the heating needs to satisfy that a number of output heating waveforms (AC half-sinusoid) = $k$ * a number of normally calculated half-sinusoids. For example, when a voltage of 220V is detected, 20 half-sinusoids (pulse width modulation with 100% duty ratio) need to be output in a unit time, e.g., 1 second, according to a current heating algorithm. The number after adjustment = $k$ * 10 = 0.21 * 10 = 4 (pulse width modulation with 20% duty ratio). Finally, in a unit time, e.g., 1 second, 4 half-sinusoids are output. The number of the normally calculated half-sinusoids of the AC is a number of half-sinusoids output under the pulse width modulation (PWM) with 100% duty ratio is used. FIG. 4 is a schematic diagram of heating waveforms under different duty ratios. Specifically, FIG. 4 shows a heating waveform curve 41 of PWM with 100% duty ratio, a heating waveform curve 42 of PWM with 75% duty ratio, a heating waveform curve 43 of PWM with 50% duty ration, and a heating waveform curve 44 of PWM with 25% duty ratio in 1 second.

When there is a large difference between the current temperature and the target temperature of the seat ring (for example, when the target temperature - the current temperature > 6°C), for example, when the heating is started or the ring temperature is reset, and the voltage is 220V, the ring temperature of the seat ring is kept at 26°C, and the heating is carried out at low power. When the seat ring is used by a user, the ring temperature needs to be quickly raised to 37°C. In the present disclosure, the heating power coefficient may be temporarily increased from 0.21 to 1, and the quick heating is carried out by using the full power coefficient. The full power coefficient is 1, which means that the heating is carried out by the PWM with 100% duty ratio. At the moment, the number of heating waveforms output in the unit time is a number of reference waveforms, e.g., 20 half-sinusoids. For the alternating current, the heating waveform may be the half-sinusoid.

According to the present disclosure, the heating control is adaptively adjusted based on the heating power coefficient to adapt to different actual voltages, so that the types of materials can be reduced. Meanwhile, a heating time can be shortened through rapid heating, the comfort is improved, and the energy consumption is reduced.

**Embodiment 3**

FIG. 5 shows a schematic structural diagram showing a hardware of an electronic device of the present disclosure. The device comprises at least one processor 501 and a memory 502 communicatively connected to the at least one processor 501.

The memory 502 stores an instruction executable by the at least one processor, and the instruction is executed by the at least one processor, so that the at least one processor can execute the heating seat ring voltage self-adaption method above.

One processor 501 is taken as an example in FIG. 5.

The electronic device may further comprise an input device 503 and a display device 504.

The processor 501, the memory 502, the input device 503, and the display device 504 may be connected via a bus or other ways. In FIG. 5, bus connection is taken as an example.

As a non-volatile computer-readable storage medium, the memory 502 may be used to store non-volatile software programs, non-volatile computer executable programs and modules, such as program instructions/modules corresponding to the heating seat ring voltage self-adaption method in the embodiments of the present disclosure, for example, the methods shown in FIG. 1, FIG. 2, and FIG. 3. The processor 501 executes various functional applications and data processing by running the non-volatile software programs, instructions, and modules stored in the memory 502 to realize the heating seat ring voltage self-adaption method in the above embodiments.

The memory 502 may comprise a program storage area and a data storage area. The program storage area may store application programs required by an operating system and at least one function, and the data storage area may store data created according to use of the heating seat ring voltage self-adaption method. In addition, the memory 502 may comprise a high-speed random-access memory and may further comprise a non-volatile memory, such as at least one disk memory device, a flash memory device, or other non-volatile solid storage devices. In some embodiments, the memory 502 may comprise memories remotely located with respect to the processor 501. The memories may be connected via networks to an apparatus for executing the heating seat ring voltage self-adaption method. Examples of the networks above comprise, but are not limited to, the Internet, intranet, local area networks, mobile communication networks, and combinations thereof.

The input device 503 may receive input user click, as well as generate signal inputs related to user settings and function control of the heating seat ring voltage self-adaption method. The display device 504 may comprise a display screen and other display devices.

When the one or more modules are stored in the memory 502 and run by the one or more processors 501, the heating seat ring voltage self-adaption method in any embodiments is executed.

According to the present disclosure, the heating control is adaptively adjusted based on the heating power coefficient to adapt to different actual voltages, so that the types of materials are reduced. Meanwhile, a heating time can be shortened through rapid heating, the comfort is improved, and the energy consumption is reduced.

One embodiment of the present disclosure provides a storage medium, wherein the storage medium stores computer instructions which, when executed by a computer, are used to execute all steps of the heating seat ring voltage self-adaption method as described above.

The above embodiments merely illustrate several embodiments of the present disclosure. The descriptions of the above embodiments are specific and detailed but cannot be understood as a limitation to the scope of the present disclosure. It should be noted that those of ordinary skill in the art may make a plurality of transformations and improvements without departing from the concept of the present disclosure, and these transformations and improvements should all fall within the scope of protection of the present disclosure. Therefore, the scope of protection of the present disclosure should be subjected to the claims appended.

An aspect provides a heating seat ring voltage self-adaption method, comprising:

determining an actual voltage acting on a seat ring heater;
determining a heating power coefficient corresponding to the actual voltage based on the actual voltage; and
performing a heating control on the seat ring heater with the heating power coefficient.

In an implementation, the determining the actual voltage acting on the seat ring heater may specifically comprise:

acquiring a measurement duty ratio used for measuring the actual voltage;
performing a measurement heating with the measurement duty ratio;
stopping the measurement heating after performing the measurement heating for a preset measurement time, and calculating a difference between a temperature when the measurement heating is stopped and a temperature before the measurement heating is performed as a temperature elevated value;
acquiring a current ambient temperature; and

determining the corresponding actual voltage according to the temperature elevated value and the current ambient temperature.

In an implementation, the acquiring the measurement duty ratio used for measuring the actual voltage may specifically comprise:

in response to a seat ring heating request, determining a target temperature of the seat ring heating request as a target ring temperature of a heating seat ring;

acquiring a current temperature of the heating seat ring as an initial ring temperature; and

determining the measurement duty ratio used for measuring the actual voltage according to a difference between the target ring temperature and the initial ring temperature.

In an implementation, the determining the corresponding actual voltage according to the temperature elevated value and the current ambient temperature may specifically comprise:

determining the corresponding actual voltage according to the measurement duty ratio used, the temperature elevated value and the current ambient temperature.

In an implementation, the determining the heating power coefficient corresponding to the actual voltage based on the actual voltage may specifically comprise:

calculating that a heating power coefficient k = (a reference voltage)$^2$ / (the actual voltage)$^2$, according to the actual voltage and a preset reference voltage.

In an implementation, the performing the heating control on the seat ring heater with the heating power coefficient may specifically comprise:

performing the heating control on the heating seat ring by using a proportion integral differential heating control method, wherein a proportional coefficient in the proportion integral differential control method is the heating power coefficient.

In an implementation, the performing the heating control on the seat ring heater with the heating power coefficient may specifically comprise:

when a difference between a target ring temperature and a current temperature of a heating seat ring is greater than a preset temperature difference threshold, performing the heating control with a preset full power coefficient; or

when the difference between the target ring temperature and the current temperature of the heating seat ring is less than or equal to the preset temperature difference threshold, performing the heating control on the seat ring heater with the heating power coefficient, wherein the full power coefficient is greater than or equal to the heating power coefficient.

In an implementation, the when the difference between the target ring temperature and the current temperature of the heating seat ring is less than or equal to the preset temperature difference threshold, performing the heating control on the seat ring heater with the heating power coefficient may specifically comprise:

when the difference between the target ring temperature and the current temperature of the heating seat ring is less than or equal to the preset temperature difference threshold, calculating a number of heating waveforms to be output in a unit time when the heating control is performed on the heating seat ring under the actual voltage as a number of reference waveforms;

calculating a number of actual waveforms by multiplying the number of reference waveforms by the heating power coefficient; and

controlling to output heating waveforms of the number of actual waveforms in each unit time.

Another aspect provides an electronic device, comprising:

at least one processor; and

a memory communicatively connected to the at least one processor; wherein,

the memory stores an instruction executable by the at least one processor, and the instruction is executed by the at least one processor, so that the at least one processor is capable of executing the heating seat ring voltage self-adaption method according to any one of claims 1 to 8.

Another aspect provides a storage medium, wherein the storage medium stores computer instructions which, when executed by a computer, are used to execute all steps of the heating seat ring voltage self-adaption method according to the present disclosure.

## Claims

1. A heating seat ring voltage self-adaption method, comprising:

   determining a voltage acting on a seat ring heater of a heating seat ring;
   determining a heating power coefficient based on the actual voltage; and
   performing a heating control on the seat ring heater by using the heating power coefficient.

2. The heating seat ring voltage self-adaption method according to claim 1, wherein the determining the voltage acting on the seat ring heater comprises:

   acquiring a measurement duty ratio used for measuring the voltage;
   performing a measurement heating by using the measurement duty ratio;
   calculating, as a temperature elevated value, a difference between a temperature when the measurement heating is stopped and a temperature before the measurement heating is performed; and
   determining the corresponding voltage based on_the temperature elevated value and a current ambient temperature.

3. The heating seat ring voltage self-adaption method according to claim 2, wherein the acquiring the measurement duty ratio used for measuring the voltage comprises:

   in response to a seat ring heating request, determining a target temperature of the seat ring heating request as a target ring temperature of the heating seat ring;
   acquiring a current temperature of the heating seat ring as an initial ring temperature; and
   determining the measurement duty ratio used for measuring the voltage based on_a difference between the target ring temperature and the initial ring temperature.

4. The heating seat ring voltage self-adaption method according to claim 3, wherein the determining the corresponding voltage according to the temperature elevated value and the current ambient temperature comprises:
   determining the corresponding voltage based on the measurement duty ratio, the temperature elevated value, and the current ambient temperature.

5. The heating seat ring voltage self-adaption method according to any one of claims 1 to 4, wherein the determining the heating power coefficient based on the voltage comprises:
   calculating the heating power coefficient by using an equation: a heating power

$$\text{coefficient } k = (\text{a preset reference voltage})^2 / (\text{the voltage})^2.$$

6. The heating seat ring voltage self-adaption method according to claim 5, wherein the performing the heating control on the seat ring heater by using the heating power coefficient comprises:

   performing the heating control on the heating seat ring by using a proportion integral differential heating control, and
   wherein a proportional coefficient used in the proportion integral differential control method is the heating power coefficient.

7. The heating seat ring voltage self-adaption method according to claim 5 or claim 6, wherein the performing the heating control on the seat ring heater by using the heating power coefficient-comprises:

   when a difference between a target ring temperature and a current temperature of a heating seat ring is greater than a preset temperature difference threshold, performing the heating control by using a preset full power coefficient; or
   when the difference between the target ring temperature and the current temperature of the heating seat ring is less than or equal to the preset temperature difference threshold, performing the heating control on the seat ring heater by using the heating power coefficient, wherein the full power coefficient is greater than or equal to the heating power coefficient; optionally
   wherein the performing the heating control on the seat ring heater by using the heating power coefficient-comprises:

when the difference between the target ring temperature and the current temperature of the heating seat ring is less than or equal to the preset temperature difference threshold, calculating, as a number of reference waveforms, a number of heating waveforms to be output in a unit time when the heating control is performed on the heating seat ring under the voltage;

calculating a number of waveforms by multiplying the number of reference waveforms by the heating power coefficient; and

controlling to output heating waveforms of the number of waveforms in each unit time.

8. The heating seat ring voltage self-adaption method according to claim 4, or any one of claims 5 to 7 when dependent on claim 4, wherein the determining the corresponding voltage based on the measurement duty ratio used, the temperature elevated value, and the current ambient temperature comprises:

in response to a start of heating the heating seat ring, determining the measurement duty ratio by querying a first table according to the difference between the target ring temperature and the initial ring temperature;

continuing to heat the heating seat ring for a predetermined time period;

collecting the temperature elevated value and the current ambient temperature after the predetermined time period; and

determining the corresponding voltage by querying a second table according to the measurement duty ratio, the temperature elevated value, the current ambient temperature, and the voltage; optionally

wherein the first table reflects a relationship between the measurement duty ratio and the difference between the target ring temperature and the initial ring temperature and/or optionally wherein the second table reflects a relationship among the measurement duty ratio, the temperature elevated value, the current ambient temperature, and the voltage.

9. The heating seat ring voltage self-adaption method according to claim 5, or any one of claims 6 to 8 when dependent on claim 5, wherein the performing the heating control on the seat ring heater by using the heating power coefficient comprises:

when a difference between a target ring temperature and a current temperature of a heating seat ring is greater than a preset temperature difference threshold, performing the heating control by increasing the heating power coefficient.

10. An electronic device, comprising:

a seat ring heater;
a processor, communicably coupled to the seat ring heater and configured to:

determine a voltage acting on the seat ring heater;
determine a heating power coefficient based on the voltage; and
perform a heating control on the seat ring heater by using the heating power coefficient.

11. The electronic device according to claim 10, wherein the processor is further configured to:

acquire a measurement duty ratio used for measuring the voltage;
perform a measurement heating by using the measurement duty ratio;
calculate, as a temperature elevated value, a difference between a temperature when the measurement heating is stopped and a temperature before the measurement heating is performed; and
determine the corresponding voltage based on the temperature elevated value and a current ambient temperature.

12. The electronic device according to claim 11, further comprising an input device communicably coupled to and configured to receive a seat ring heating request,
wherein the processor is further configured to:

in response to the seat ring heating request, determine a target temperature of the seat ring heating request as a target ring temperature of the heating seat ring;
acquire a current temperature of the heating seat ring as an initial ring temperature; and

determine the measurement duty ratio used for measuring the voltage on a difference between the target ring temperature and the initial ring temperature.

13. The electronic device according to claim 12, wherein the processor is further configured to determining the corresponding voltage based on the measurement duty ratio, the temperature elevated value, and the current ambient temperature.

14. The electronic device according to claim 13, further comprising a memory communicably coupled to the processor and configured to store a first table and a second table,

wherein the processor is further configured to:

in response to a start of heating the heating seat ring, determine the measurement duty ratio by querying the first table according to the difference between the target ring temperature and the initial ring temperature;
continue to heat the heating seat ring for a predetermined time period;
collect the temperature elevated value and the current ambient temperature after the predetermined time period; and
determine the corresponding voltage by querying the second table according to the measurement duty ratio, the temperature elevated value, the current ambient temperature, and the voltage; optionally

wherein the first table reflects a relationship between the measurement duty ratio and the difference between the target ring temperature and the initial ring temperature, and/or optionally wherein the second table reflects a relationship among the measurement duty ratio, the temperature elevated value, the current ambient temperature, and the voltage.

15. A non-transitory storage medium configured to store computer instructions executed by a processor, the processor configured to:

determine a voltage acting on the seat ring heater;
determine a heating power coefficient based on the voltage; and
perform a heating control on the seat ring heater by using the heating power coefficient; optionally
wherein the processor is further configured to:

acquire a measurement duty ratio used for measuring the voltage;
perform a measurement heating by using the measurement duty ratio;
stop the measurement heating after performing the measurement heating for a preset measurement time;
calculate, as a temperature elevated value, a difference between a temperature when the measurement heating is stopped and a temperature before the measurement heating is performed;
acquire a current ambient temperature; and
determine the corresponding voltage based on the temperature elevated value and the current ambient temperature.

S101

Determine an actual voltage acting on a seat ring heater.

S102

Determine a heating power coefficient based on the actual voltage.

S103

Perform a heating control on the seat ring heater by using the heating power coefficient.

**FIG. 1**

S201 — Acquire a measurement duty ratio used for measuring the actual voltage.

S202 — Perform a measurement heating by using the measurement duty ratio.

S203 — Stop the measurement heating after performing the measurement heating for a preset measurement and calculate a difference between a temperature when the measurement heating is stopped and a temperature before the measurement heating is performed as a temperature elevated value.

S204 — Acquire a current ambient temperature.

S205 — Determine the corresponding actual voltage according to the temperature elevated value and the current ambient temperature.

S206 — Calculate the heating power coefficient according to the actual voltage and a preset reference voltage.

S207 — Perform heating control on the seat ring heater by using the heating power coefficient.

**FIG. 2**

S300 — Power on a seat ring.

S301 — Start to heat the seat ring and obtain a measured PWM value by querying a table according to a temperature difference ΔT, wherein the temperature difference ΔT = a target ring temperature – an initial ring temperature.

S302 — Heat for a certain time (such as 30 seconds).

S303 — Read a temperature value.

S304 — Collect the temperature elevated value and the ambient temperature value of the seat ring and obtain the actual voltage of the heater by querying the table, wherein the temperature elevated value is equal to a temperature value after heating minus a temperature value before heating.

S305 — Store a voltage value.

S306 — Complete voltage detection.

**FIG. 3**

**FIG. 4**

**FIG. 5**

Europäisches
Patentamt

European
Patent Office

Office européen
des brevets

# EUROPEAN SEARCH REPORT

**Application Number**

EP 22 21 1938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 031942 A (TOTO LTD) 8 February 2007 (2007-02-08) | 1,5-7,9, 10,15 | INV. H05B1/02 A47K13/30 |
| Y | * abstract * * figures 1-5 * * paragraphs [0003], [0009] – [0011], [0022], [0034] – [0054], [0061], [0072] – [0088] * * claim 1 * | 2-4,8, 11-14 | |
| X | JP 2017 203340 A (PANASONIC IP MAN CORP) 16 November 2017 (2017-11-16) | 1,5-7,9, 10,15 | |
| Y | * abstract * * claims 1,2 * * paragraphs [0005], [0006], [0009], [0012], [0018] – [0022] * * figures 1-4 * | 2-4,8, 11-14 | |
| Y | US 6 710 309 B1 (HIRST B MARK [US]) 23 March 2004 (2004-03-23) * abstract * * claim 1 * * figure 1 * * column 2, lines 24-46 * * column 3, line 44 – column 4, line 27 * | 2-4,8, 11-14 | TECHNICAL FIELDS SEARCHED (IPC) H05B A47K |
| A | EP 3 272 259 A1 (DURAVIT AG [DE]) 24 January 2018 (2018-01-24) * abstract * * paragraphs [0002], [0009], [0011], [0016], [0023], [0027], [0028] * * claim 1 * * figure 3 * | 1-15 | |
| A | JP 2003 219985 A (AISIN SEIKI) 5 August 2003 (2003-08-05) * abstract * * figure 3 * | 1-15 | |

The present search report has been drawn up for all claims

| Place of search | Date of completion of the search | Examiner |
|---|---|---|
| Munich | 31 March 2023 | de la Tassa Laforgue |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 1938

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | Publication date | Patent family member(s) | | Publication date |
|---|---|---|---|---|---|
| JP 2007031942 | A | 08-02-2007 | NONE | | |
| JP 2017203340 | A | 16-11-2017 | NONE | | |
| US 6710309 | B1 | 23-03-2004 | JP | 4212668 B2 | 21-01-2009 |
| | | | JP | H1090310 A | 10-04-1998 |
| | | | US | 6710309 B1 | 23-03-2004 |
| EP 3272259 | A1 | 24-01-2018 | CN | 107638122 A | 30-01-2018 |
| | | | EP | 3272259 A1 | 24-01-2018 |
| JP 2003219985 | A | 05-08-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111486676
- US 07315222